# EUROPEAN PATENT APPLICATION

(11) **EP 3 349 075 A1**
(43) Date of publication of application: **18.07.2018**
(21) Application number: 17195415.9
(22) Date of filing: 09.10.2017
(51) Int. Cl.: G05B 13/02

(54) **CONTROL DEVICE, CONTROL METHOD, AND CONTROL PROGRAM FOR DETERMINING AN ABNORMALITY**

(30) Priority: 13.01.2017 JP 2017003828
(71) Applicant: Omron Corporation, Kyoto-shi, Kyoto 600-8530 (JP)
(72) Inventor: YAMADA, Takaaki, Kyoto-shi, Kyoto 600-8530 (JP); HOSOKAWA, Hirofumi, Kyoto-shi, Kyoto 600-8530 (JP); OHTA, Morihisa, Kyoto-shi, Kyoto 600-8530 (JP); MUKAI, Atsushi, Kyoto-shi, Kyoto 600-8530 (JP); TANAKA, Hitoshi, Kyoto-shi, Kyoto 600-8530 (JP); HASUI, Ryosuke, Kyoto-shi, Kyoto 600-8530 (JP); YANO, Keisuke, Kyoto-shi, Kyoto 600-8530 (JP); TAKAISHI, Akira, Kyoto-shi, Kyoto 600-8530 (JP); TOGAWA, Hiroyuki, Kyoto-shi, Kyoto 600-8530 (JP); UEDA, Norihiro, Kyoto-shi, Kyoto 600-8530 (JP); TANAKA, Seiji, Kyoto-shi, Kyoto 600-8530 (JP)
(74) Representative: Becker Kurig Straus

(57) **Abstract**

A temperature adjustment device 10 includes a PID calculation part 12, a PID control part 14, and a determination part 15. The PID calculation part 12 calculates a PID value by auto-tuning. The PID control part 14 performs PID control using the PID value. The determination part 15 determines an abnormality in PID control or an abnormality in a target device using the PID value. This allows easy determination of the abnormality in PID control.

## Description

### BACKGROUND OF THE INVENTION

### Field of the Invention

The present invention relates to a technology for determining an abnormality in control such as temperature control or motor control of a target device.

### Description of Related Art

In the related art, PID control such as that shown in Patent Document 1 is often used for control devices in temperature adjusters or the like.

A PID control device includes a PID control part and a PID adjustment part as shown in Patent Document 1. The PID adjustment part calculates a PID value (including a proportional band P, an integral time TI, a derivative time Td, or the like) using adaptive control or auto-tuning and provides the calculated PID value to the PID control part.

The PID control part determines the amount of manipulation for a control target using the PID value, a target value of PID control, and a current value thereof. The amount of manipulation is fed back to the PID adjustment part and the PID adjustment part recalculates and updates the PID value using the amount of manipulation and provides the resulting PID value to the PID control part.

### [Prior Art Document]

### [Patent Documents]

[Patent Document 1] Japanese Unexamined Patent Application Publication No. 2005-284828

### SUMMARY OF THE INVENTION

In a system using PID control as described above, PID control may become abnormal due to characteristics fluctuations, aging deterioration, environmental fluctuations, or the like of the control target.

However, the PID control device described in Patent Document 1 has no configuration for determining an abnormality in PID control by auto-tuning and thus cannot detect an abnormality in PID control.

Also, in the related art, in order to determine an abnormality, generally, system identification of a control target needs to be performed and it is also necessary to individually identify characteristics such as a time constant and a stationary gain of the control target. Such system identification is not easy since the amount of calculation is very large and, for example, the use of high-speed hardware with a large memory capacity or the like is needed. Thus, it is also not easy to determine a control abnormality in such PID control.

Therefore, it is an object of the present invention to allow easy determination of an abnormality in PID control.

A control device of the present invention includes a PID calculation part configured to calculate a PID value by auto-tuning, a PID control part configured to perform PID control using the PID value, and a determination part configured to determine an abnormality in the PID control or an abnormality in a target device using the PID value.

In this configuration, using the fact that, when an abnormality occurs in a control system including a control device, the PID value also changes, an abnormality in the PID control or an abnormality in the target device is determined using the PID value.

In the control device of the present invention, the determination part may be configured to acquire a reference PID value which is a PID value at a preset ordinal position and a current PID value which is later than the preset ordinal position. The determination part may be configured to determine an abnormality in the PID control or an abnormality in the target device on the basis of a change in the current PID value with respect to the reference PID value.

In this configuration, an abnormality in the PID control or an abnormality in the target device is easily determined using the predetermined reference PID value.

In the control device of the present invention, the determination part may be configured to determine that the PID control or the target device is abnormal when a change rate of the current PID value with respect to the reference PID value exceeds a threshold value.

In this configuration, an abnormality in the PID control or an abnormality in the target device is easily determined using the change rate and the threshold value of the change rate.

In the control device of the present invention, the PID calculation part may be configured to repeat calculation of the PID value. When the PID calculation part has calculated the PID value, the determination part may be configured to calculate a change rate of the current PID value with respect to the reference PID value using the calculated PID value as the current PID value. When the change rate consecutively exceeds the threshold value a predetermined number of times, the determination part may be configured to determine that the PID control or the target device is abnormal.

In this configuration, even if the PID value has temporarily changed greatly due to noise or the like, it is not determined that the PID control is abnormal. This prevents an erroneous determination of an abnormality in the PID control or an abnormality in the target device.

The control device of the present invention may further include a notification part configured to notify that an abnormality in the PID control or an abnormality in the target device has been determined by the determination part.

In this configuration, an abnormality in the PID control is easily recognized by an operator.

According to the present invention, it is possible to easily determine an abnormality in PID control by auto-tuning.

### BRIEF DESCRIPTION OF THE DRAWINGS

Fig. 1 is a functional block diagram of a temperature adjustment system including a temperature adjustment device according to a first embodiment of the present invention.
Fig. 2 is a flowchart of a first abnormality determination process according to the first embodiment of the present invention.
Fig. 3 is a flowchart of a second abnormality determination process according to the first embodiment of the present invention.
Fig. 4 is a functional block diagram of a temperature adjustment system including a temperature adjustment device according to a second embodiment of the present invention.
Fig. 5 is a flowchart of a first abnormality notification process according to the second embodiment of the present invention.
Fig. 6 is a flowchart of a second abnormality determination process according to the second embodiment of the present invention.

### DESCRIPTION OF THE EMBODIMENTS

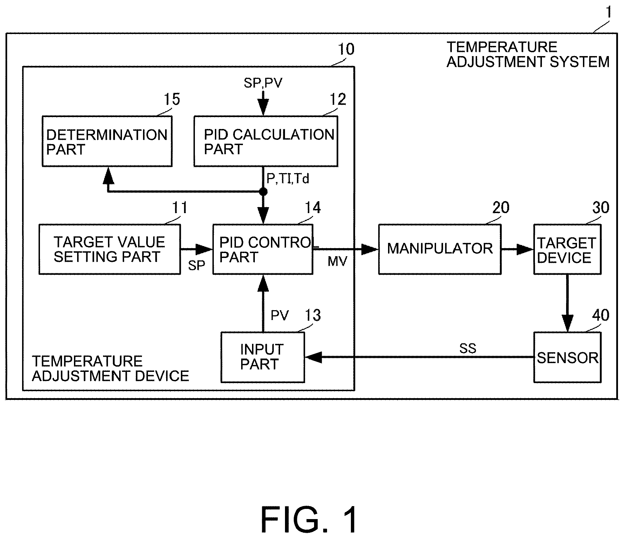

A control device, a control method, and a control program according to a first embodiment of the present invention will be described with reference to the drawings. In the following embodiments, the case of temperature adjustment (temperature control) of a heater or the like is shown as a specific example of control, but the present invention is also applicable to control of other physical quantities such as rotation control of a motor or the like. Fig. 1 is a functional block diagram of a temperature adjustment system including a temperature adjustment device according to the first embodiment of the present invention.

As shown in Fig. 1, the temperature adjustment device 10 includes a target value setting part 11, a PID calculation part 12, an input part 13, a PID control part 14, and a determination part 15. The temperature adjustment device 10 corresponds to the "control device" of the present invention.

As shown in Fig. 1, the temperature adjustment device 10 is a component of the temperature adjustment system 1. The temperature adjustment system 1 includes the temperature adjustment device 10, a manipulator 20, a target device 30, and a sensor 40. The target device 30 includes, for example, a heater (not shown). Thus, in this case, the control target is the temperature at a predetermined position on the target device 30. The manipulator 20 is, for example, an SSR, an electromagnetic switch, or a power regulator. The manipulator 20 operates according to an amount of manipulation MV from the temperature adjustment device 10 to control application of current to the heater of the target device 30. The sensor 40 is, for example, a thermocouple or the like and measures the temperature of the target device 30 and outputs measurement data SS. The measurement data SS is input to the input part 13 of the temperature adjustment device 10.

Next, details of the temperature adjustment device 10 will be described.

The input part 13 calculates an actually measured value PV from the measurement data SS. The input part 13 outputs the actually measured value PV to the PID calculation part 12 and the PID control part 14. The actually measured value PV is a value in the same units as a target value SP which will be described later. For example, if the target value SP is in degrees Celsius (□), the actually measured value PV is also in degrees Celsius (□).

The target value setting part 11 sets the target value SP. The target value SP is set by an operator or the like. A stored target value SP may also be used when the target value setting part 11 includes a means for storing the target value SP. The target value SP is, for example, a temperature. The target value setting part 11 outputs the target value SP to the PID calculation part 12 and the PID control part 14.

The PID calculation part 12 performs auto-tuning such as a limit cycle method and sets a PID value from temperature waveform information. The PID value includes a proportional band P, an integral time TI, and a derivative time Td. Specifically, the PID calculation part 12 calculates a dead time L from a limit cycle period Tc. The PID calculation part 12 calculates the integral time TI and the derivative time Td from the dead time L. Further, the PID calculation part 12 calculates the proportional band P from the amplitude of the limit cycle.

The PID calculation part 12 repeatedly performs PID value calculation by auto-tuning at predetermined time intervals. "Auto-tuning" in the present invention indicates an adjustment method for automatically calculating the PID value and includes a known PID value adjustment method which is called adaptive control. The PID calculation part 12 sequentially outputs the PID value to the PID control part 14 and the determination part 15.

The PID control part 14 calculates the amount of manipulation MV by performing known PID control calculation using the PID value, the target value SP, and the actually measured value PV. The PID control part 14 outputs the amount of manipulation MV to the manipulator 20.

The PID control part 14 includes a digital filter. Thus, more specifically, the target value SP and the actually measured value PV are input to the PID control part 14 through an analog/digital (A/D) converter (not shown) and the amount of manipulation MV is output to the manipulator 20 through a digital/analog (D/A) converter (not shown).

The determination part 15 determines an abnormality in PID control by the following method using the PID value.

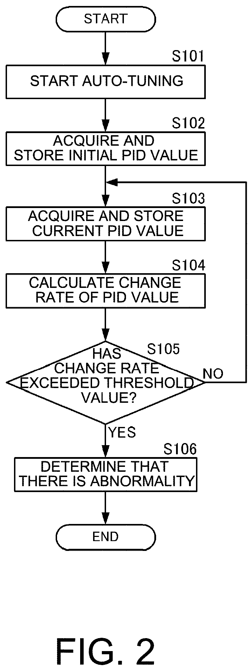

Fig. 2 is a flowchart of a first abnormality determination process according to the first embodiment of the present invention. Step S101 shown in Fig. 2 is a process of the PID calculation part 12 and processes of step S102 and subsequent steps are processes of the determination part 15.

First, the PID calculation part 12 starts auto-tuning (S101).

The determination part 15 acquires an initial PID value by auto-tuning and stores the acquired initial PID value (S102). Thereafter, the determination part 15 sequentially acquires and stores the PID value output from the PID calculation part 12.

In a state in which auto-tuning is continued, the determination part 15 acquires and stores a current PID value (S103).

The determination part 15 calculates a change rate ΔPID of the PID value (S104). The change rate of the PID value is the rate of a change of the current PID value with respect to the initial PID value as a reference PID value. For example, the change rate ΔPID of the PID value is calculated by a formula ((current PID value) - (initial PID value))/(initial PID value). Thus, in this process, the initial PID value is set to a "reference PID value" of the present invention.

The determination part 15 previously stores a threshold value of the change rate ΔPID of the PID value. The threshold value of the change rate ΔPID of the PID value is a value corresponding to the characteristics of the temperature adjustment system 1 which is set in advance by experiments or the like.

The determination part 15 determines that PID control is abnormal (S106) when the change rate ΔPID of the PID value exceeds the threshold value (S105: YES). When the change rate ΔPID of the PID value is less than the threshold value (S105: NO), the determination part 15 returns to the process of acquiring and storing the current PID value.

According to a general PID adjustment rule (for example, a Ziegler Nichols (ZN) method), there is the following proportional relationship between the system characteristics and the PID value after auto-tuning.

### Proportional band P ∝ system gain K ∝ heater capacity (system load)

### Integral time TI ∝ derivative time Td ∝ dead time L

Accordingly, when the system characteristics significantly change, the PID value also significantly changes. That is, when the system characteristics significantly change, the change rate ΔPID of the PID value also becomes great as compared to when the system characteristics do not change. Therefore, by setting a threshold value for the change rate ΔPID of the PID value and detecting that the change rate ΔPID of the PID value exceeds the threshold value, it is possible to determine a significant change in the system characteristics, that is, an abnormality in PID control.

With the configuration and method of the present embodiment, it is possible to determine an abnormality in PID control merely by using the PID value that is a parameter of PID control. That is, it is possible to easily determine an abnormality in PID control. It is also possible to determine an abnormality in PID control without using a large-scale identification system. As a result, an abnormality in the control target caused by characteristics fluctuations, aging deterioration, environmental fluctuations, or the like of the control target can easily be determined with an easy and simple configuration.

An abnormality in PID control can also be determined by the following method.

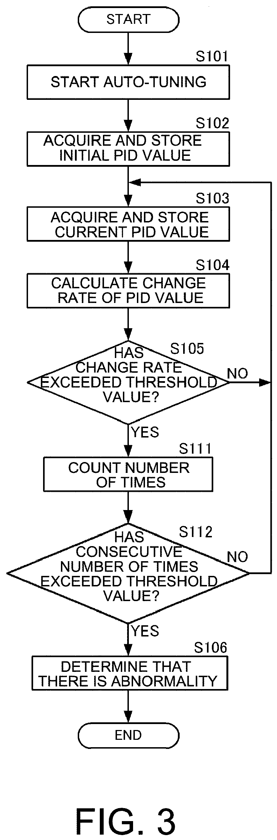

Fig. 3 is a flowchart of a second abnormality determination process according to the first embodiment of the present invention. Step S101 shown in Fig. 3 is a process of the PID calculation part 12 and processes of step S102 and subsequent steps are processes of the determination part 15. Descriptions of the same steps as those in Fig. 2 will be omitted.

When the change rate ΔPID of the PID value has exceeded a threshold value (S105: YES), the determination part 15 sets a flag and counts the number of flags (S111).

The determination part 15 determines that PID control is abnormal (S106) when the number of consecutive flags exceeds a threshold value (S112: YES). When the number of consecutive flags is less than the threshold value (S112: NO), the determination part 15 returns to the process of acquiring and storing the current PID value.

By performing the above procedure, it is possible to prevent erroneous determination that PID control is abnormal when a PID value has temporarily changed greatly due to noise or the like in a state in which there is no change (abnormality) in the characteristics of the temperature adjustment system 1. That is, it is possible to more reliably and accurately determine an abnormality in PID control.

The above description shows a mode in which an abnormality in PID control is determined through a plurality of functional parts. However, the procedure shown in the above flowchart, that is, the control method may be programmed and stored and the program may be executed by an information processing device such as a CPU.

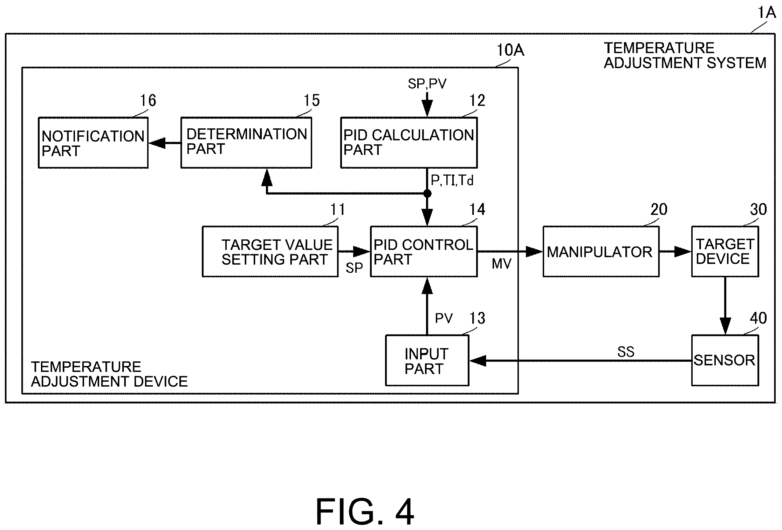

Next, a control device, a control method, and a control program according to a second embodiment of the present invention will be described with reference to the drawings. Fig. 4 is a functional block diagram of a temperature adjustment system including a temperature adjustment device according to the second embodiment of the present invention.

As shown in Fig. 4, a temperature adjustment system 1A and a temperature adjustment device 10A according to the present embodiment are different from the temperature adjustment system 1 and the temperature adjustment device 10 according to the first embodiment in that a notification part 16 is added. Other configurations of the temperature adjustment system 1A and the temperature adjustment device 10A are similar to those of the temperature adjustment system 1 and the temperature adjustment device 10 and descriptions of similar parts will be omitted.

Upon determining that PID control is abnormal, the determination part 15 outputs the determination result to the notification part 16.

The notification part 16 includes a display device such as a liquid crystal display device or an LED lamp or a sound emitting device such as a buzzer. The notification part 16 notifies of PID control abnormality on the basis of the determination result.

Such a configuration allows the operator to easily recognize an abnormality in PID control.

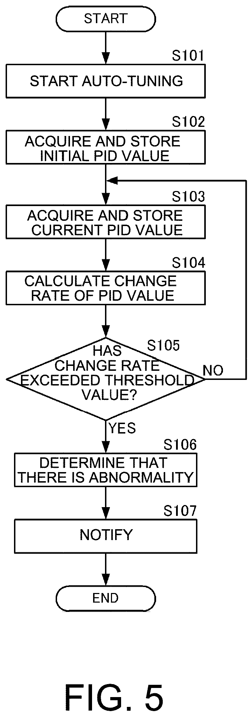

Fig. 5 is a flowchart of a first abnormality notification process according to the second embodiment of the present invention. The abnormality notification process shown in Fig. 5 is similar to that of the flowchart shown in Fig. 2 up to the determination of abnormality and descriptions of similar parts will be omitted.

When the determination part 15 has determined that PID control is abnormal (S106), the notification part 16 notifies the outside of this abnormality of PID control (S107).

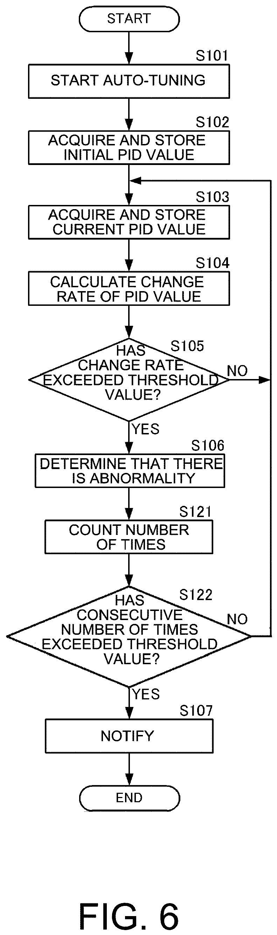

It is also possible to notify of an abnormality in PID control by the following method. Fig. 6 is a flowchart of a second abnormality determination process according to the second embodiment of the present invention. The abnormality notification process shown in Fig. 6 is similar to that of Figs. 2 and 5 up to step S106 of abnormality determination and descriptions of similar parts will be omitted.

Upon determining that there is an abnormality (S106), the determination part 15 or the notification part 16 sets a flag and counts the number of flags (S121).

The determination part 15 or the notification part 16 notifies that PID control is abnormal (S107) when the number of consecutive flags exceeds a threshold value (S122: YES). When the number of consecutive flags is less than the threshold value (S122: NO), the determination part 15 returns to the process of acquiring and storing the current PID value.

By performing the above procedure, it is possible to prevent erroneous notification that PID control is abnormal when a PID value has temporarily changed greatly due to noise or the like in a state in which there is no change (abnormality) in the characteristics of the temperature adjustment system 1A. That is, it is possible to more reliably and accurately notify of an abnormality in PID control.

Modes of using a change rate are shown in each of the above embodiments, but another amount (of change) may be used provided that it is an amount representing a change of the current PID value with respect to the initial PID value.

The PID value used for abnormality determination may be of one type or a plurality of types although no details are described in the above description. For example, either the proportional band P or the integral time TI may be used for abnormality determination or both of them may be used. When multiple types of PID values are used, a function having such PID values as variables may be set and the function's value may be compared with a threshold value to determine an abnormality.

Modes in which the initial PID value is set as a reference PID value are shown in the above description, but a PID value at a preset ordinal position may also be used as a reference PID value. For example, a second PID value or the like can be used as a reference PID value. In this case, a PID value which is later in time than the reference PID value is used as the current PID value.

The following processes may be added to the above configurations of the temperature adjustment devices 10 and 10A.

(A) Determination and notification are not performed when the difference (deviation) between an initial value of the actually measured value and a target value is within a predetermined range. When the deviation is small, the PID value easily fluctuates and therefore there is a possibility of erroneously determining that PID control is abnormal even if there is no abnormality in the system, but this erroneous determination can be prevented.

(B) The PID value is not calculated when the difference (deviation) between an initial value of the actually measured value and a target value is within a predetermined range or when the initial value of the actually measured value is higher than the target value. In this case, PID control easily becomes unstable and therefore auto-tuning is not performed. This can prevent the occurrence of problems of the system (for example, the occurrence of failed products) due to instability of PID control.

(C) When it is determined that there is an abnormality, whether to perform notification or to automatically perform update (reset) of auto-tuning is selected. This can improve ease of use for the operator.

(D) A PID value necessary to implement adaptive control is stored. This makes it possible to facilitate initial setting when adaptive control is performed and also to quickly and stably perform adaptive control.

(E) Various parameters (for example, an amplitude and/or a period of a limit cycle waveform, a dead time L, or a maximum ramp R) used for PID value calculation by auto-tuning are stored as parameters for adaptive control. This makes it possible to facilitate initial setting when adaptive control is performed and also to quickly and stably perform adaptive control.

(F) Parameters (for example, parameters as shown in the processes (D) and (E)) necessary to implement adaptive control are copied to another temperature adjustment device. This allows parameters calculated by the device to be inherited by another device.

(G) Parameters necessary to implement adaptive control are deleted or initialized when the setting of a sensor type, the unit of temperature, or the like has changed. This makes it possible to prevent the use of incorrect parameters when the control target has changed.

(H) A selection of whether or not updating is possible is received from the operator after notification of an abnormality is performed and updating is performed only when updating is possible. This makes it possible to realize processes matching the operator's intention.

### REFERENCE NUMERALS

- 1, 1A: TEMPERATURE ADJUSTMENT SYSTEM
- 10, 10A: TEMPERATURE ADJUSTMENT DEVICE
- 11: TARGET VALUE SETTING PART
- 12: PID CALCULATION PART
- 13: INPUT PART
- 14: PID CONTROL PART
- 15: DETERMINATION PART
- 16: NOTIFICATION PART
- 20: MANIPULATOR
- 30: TARGET DEVICE
- 40: SENSOR
- SP: TARGET VALUE
- PV: ACTUALLY MEASURED VALUE
- MV: AMOUNT OF MANIPULATION
- P: PROPORTIONAL BAND
- TI: INTEGRAL TIME
- Td: DERIVATIVE TIME
- SS: MEASUREMENT DATA
- S101∼S122: STEP

## Claims

1. A control device (10, 10A) comprising:
a PID calculation part (12) configured to calculate a PID value by auto-tuning;
a PID control part (14) configured to perform PID control using the PID value; and
a determination part (15) configured to determine an abnormality in the PID control or an abnormality in a target device (30) using the PID value.

2. The control device (10, 10A) according to claim 1, wherein the determination part (15) is configured to acquire a reference PID value which is a PID value at a preset ordinal position and a current PID value which is later than the preset ordinal position and to determine the abnormality in the PID control or the abnormality in the target device (30) on a basis of a change in the current PID value with respect to the reference PID value.

3. The control device (10, 10A) according to claim 2, wherein the determination part (15) is configured to determine that the PID control or the target device (30) is abnormal when a change rate of the current PID value with respect to the reference PID value exceeds a threshold value.

4. The control device (10, 10A) according to claim 3, wherein the PID calculation part (12) is configured to repeat calculation of the PID value, and
when the PID calculation part (12) has calculated the PID value, the determination part (15) is configured to calculate the change rate of the current PID value with respect to the reference PID value using the calculated PID value as the current PID value, and
when the change rate consecutively exceeds the threshold value a predetermined number of times, the determination part (15) is configured to determine that the PID control or the target device (30) is abnormal.

5. The control device (10, 10A) according to any one of claims 1 to 4, further comprising a notification part (16) configured to notify that the abnormality in the PID control or the abnormality in the target device (30) has been determined by the determination part (15).

6. A control method allowing a control device (10, 10A) to:
calculate a PID value by auto-tuning;
perform PID control using the PID value; and
determine an abnormality in the PID control or an abnormality in a target device (30) using the PID value.

7. A control program causing a control device (10, 10A) to perform:
a process of calculating a PID value by auto-tuning;
a process of performing PID control using the PID value; and
a process of determining an abnormality in the PID control or an abnormality in a target device (30) using the PID value.
